# EUROPEAN PATENT SPECIFICATION

(11) **EP 2 101 083 B1**
(45) Date of publication and mention of the grant of the patent: **07.09.2011**
(21) Application number: 09386003.9
(22) Date of filing: 22.01.2009
(51) Int. Cl.: F16H 37/04, F16H 3/54, F16H 3/089

(54) **Serial box for quick speed alteration**
Serielle Box zur schnellen Geschwindigkeitsveränderung
Boîte série pour modification rapide de la vitesse

(30) Priority: 25.01.2008 GR 20080100052
(43) Date of publication of application: 16.09.2009
(73) Proprietor: Mastrokalou, Moscha, Artemonas, Sifnos 84003 (GR)
(72) Inventor: Mastrokalou, Moscha, Artemonas, Sifnos 84003 (GR)

(56) References cited:
- DE-A1-102007 007 037
- JP-A- 2005 299 881

## Description

The present invention relates to a serial box for quick speed alteration, wherein the speed alteration is possible without interrupting the transmission or without declutching, irrespective of the rotational speed of the engine as it is known from JP 2005-299881 A which forms the preamble of claim 1. The present invention may be used, among others, in all vehicles.

A feature of the unit is that the use of a clutch is unnecessary since there is a planetary revolution reducer, located before the various speed ratio gears and thus in case that none part of the reducer is braked, there is no transmission to its output. According to another embodiment of the invention, a clutch may be used for energy saving, heating the engine in cold climates and for extending its lifetime.

A particular feature of the unit is that the planetary reducer is followed by pairs of ratio gears which are arranged on two rows or shafts. The shaft proximal to the reducer, also called intermediate, comprises gears in permanent connection by a key and is connected to the reducer via a flexible joint. The second shaft, the so-called output shaft, comprises gears in controlled, but not permanent, connection. Based on the way that the connection-disconnection of the gears of the output shaft is controlled, the box presents two variations.

In the first variation, we have two clutches with the same operation principle. The first one is the clutch used for input or interruption of motion to the box, while the second one is used for the connections-disconnections of the various ratio gear pair. Their only difference is that the specific clutch, depending on the command, may alternatively serve the front pair of gears or the back pair of gears. A further feature of the box is that the number of speed stages available for forward motion is the same as for the reverse motion. In the present description, the device consists of three speeds with two pair of ratio gears, one for the forward motion and one for the reverse motion. Apparently, the present description is not limiting, since we may insert the output side as may gear pairs as desired.

As a second embodiment, the difference consists in the use of a clutch with a sphere screw, which connects and disconnects the gears. In the present case, the sphere screw passes through the hollow and continuous shaft axially. The shaft has the non-permanently connected gears and comprises incisions from where small rods protrude, which constitute extensions of a two-way clutch. Thus, the sphere screw, when passing through its axial point, pushes the rods to the periphery and these in turn remove the load spheres from the area where they operated as bearings and insert them in an area with oblique surfaces so that they cannot move any further and thus the desired connection is effected. For the disconnection, the sphere screw is displaced and the bars under the influence of return springs are inserted in the released hollow area of the shaft, operating again as bearings. Similarly to the first embodiment, the number of speed stages available for forward motion is the same as that for the reverse motion, while here we can insert at the output area as many pairs of ratio gears as desired. In the present description, the operation principle is presented with only two ratio pairs.

Variations of the present invention may comprise effectors which are electromagnets, reversible electric engines or step motors, hydraulic cylinders or hydraulic rotational oscillators and also conventional hairpins cooperating with lever arms or wires. Also, the command providers may be, depending on the effectors used, laterns with electric contacts, laterns with protrusions or incisions for the displacement of the rods, or laterns for winding or unwinding of wires. The units are equipped with their own oil pumps and the gears may be of any kind. These and other features and advantages of the present invention will be fully understood from the following detailed description. The invention will be fully understood with reference to the accompanying figures in which an exemplary embodiment is presented.
Figure 1 shows the plan view of a serial box of quick speed alteration which uses two clutches. The box consists of an input clutch, a planetary reducer and a flexible joint. Also the shaft having gears permanently connected, as well as the opposite shaft with gears of controlled connection-disconnection are presented, with special two-way clutches between them. At the one end of the shaft, there is an oil pump while at the other end the rotational motion is provided.
Figures 2 and 3 present in front view and side view respectively, the construction and operation principle of the clutch for input or interruption of the motion to the box. The operation mode of the clutch for connection-disconnection of controlled gears is similar.
Figure 4 presents the control of the input clutch by a hydraulic cylinder. The control of the two-way operation of the gear pairs is similar.
Figure 5 shows the partial view of serial box of quick speed alteration which uses a clutch with sphere screw for the connection and disconnection of gears. The figure shows in detail the shaft with the connection/disconnection gears.
Figure 6 presents two overrunning clutches, located one after the other in axial position on a common carrier thereof.

Referring to the accompanying figures, an exemplary embodiment of the invention is given.

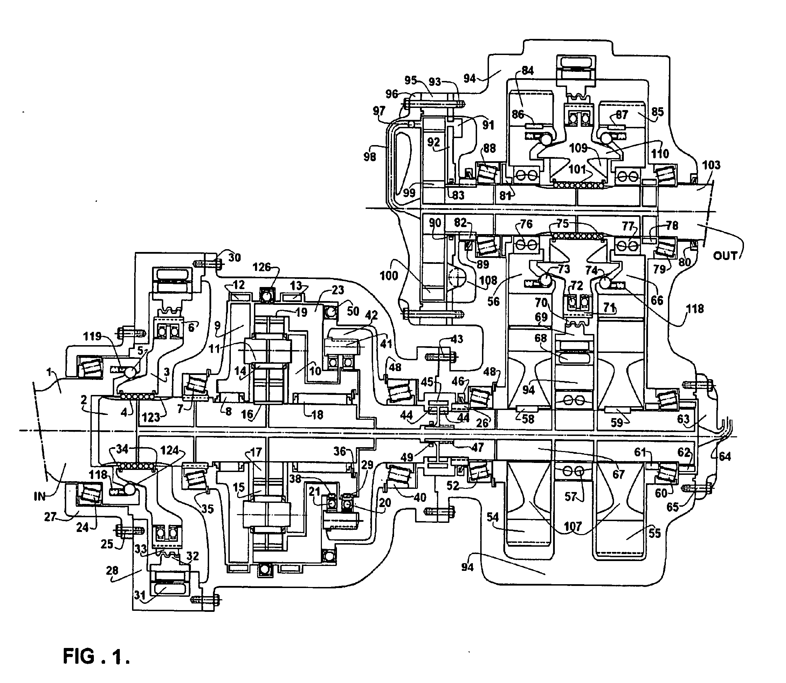

Figure 1 shows the plan view of a serial box of quick speed alteration which uses two clutches. At the end of the shaft (2) of the sun (17) of the planetary reducer there is a spline (123), in which the smooth-transition spheres (4) of the hollow frustoconical drum (3) which is also the receiver of the coupling and transfer of the rotational motion. The hollow frustoconical drum (3) also interacts with the coupling spheres (5), when these escape from the conical path in which they normally roll, forcing these to decentralize and be located in a larger diameter, where the oblique flat area for interruption of the smooth operation is formed, which stops the free rolling of the spheres and effects the coupling and transfer of motion. The coupling spheres (5) are permanently compressed via the springs (118) and the piston guides (119) on the surface of the hollow frustoconical drum (3), so that any possible increase of the gap that may happen as a result of the long-term use is maintained to a minimum, while in parallel the noisy operation is avoided. The shaft of the clutch (2) is supported on cylindrical support bearings (24), while the housing of the cylinder bearing (27) is fixed with screws (25) on the main housing (28), which also has the engine effector (31) of the clutch. The rotor (32) of the engine (31) has a coil configuration, so that it transfers the motion via the coil (33), which constitutes a part of the carrier (6) of the thrust bearing, thereby effecting the connection or disconnection control.

The effector is fixed on the main housing (28) by the fixing screws (30). The shaft is connected on the housing with the cylindrical support bearing (7) and by means of a circlip (35). The planetary carrier (9) comprises holes in which the pins of the gears of the planets (15) snap, which in turn they rest on the pins with the needle bearings (14). For the support of the planetary carrier, the needle support bearings (8) are used. The body of the planetary carrier (9) extends also to the other side with the disk (10), which has an extension with a socket for the insertion of the needle bearing (18) for better support. On this body, the pins of the gears of the planets (18) snap with the circlips (36) and thus the full cage is formed.

The shaft (2) is connected by the key (16) with the sun (17) so that it transfers the motion of the planet (15) to the gear (19) of the loop (23). The body of the loop has the form of a stepwise cylinder and is externally supported on its periphery with the cylinder bearing (126), internally is counter-supported with the bearing (50), while the tail of the body ends and is connected with one overrunning clutch which is located on the common shaft of the clutch carrier (42). By the key connecting the internal ring (38) and the load spheres of the planetary carrier (21) the motion is transferred to the common clutch carrier (41). Laterally to the first one and axially another overrunning clutch is positioned, which transfers the rotational motion of the planetary carrier (9) to the common carrier of the clutches (4 1 ). This is effected by the key of the internal ring (29) of the clutch in combination with the load spheres of the loop clutch (20).

If the bandbrake retaining the loop (12) is activated, the planetary carrier (9) is held from the rotational motion, thus the planets (15) rotate around the shaft (2) transferring the motion from the gear (19) of the loop (23) to the common clutch carrier (41). Similarly, if the reverse motion is selected, then the bandbrake (13) of the loop (23) is activated, thus the loop (23) is immobilized and thus the reversed motion is output from the planetary carrier (9). This motion, similarly by the key of the internal ring of the clutch (29) and the load spheres of the clutch (20), will be again received by the common clutch carrier (41) and by the common shaft (42).

The permanent-connection gear shaft (67) is connected to the common shaft of the clutch carrier (42) via the gear-like elements (44), on which the connection chain (45) rests. On the permanent-connection gear shaft (67) a tubular piece (47) is screwed, on which a synthetic oil-seal ring (49) abuts. Then, on the permanent-connection gear shaft (67), the receptors of the gears (107) are fixed via the connection keys (58) and (59) and on the receptors the gears (54 and 55). The shaft is supported at the ends with the cylinder bearings (52, 60), which in turn are retained in position with the circlips (48) and additionally with the nut (26) and the spacers (61, 62), and at the center with the self-aligned double bearing (57). The shaft is covered by the body of the housing (94). The opposite side of the flexible joint is closed by the cover (63), by the screws (65), and has a lubrication oil supply joint (64). The controlled-connection gears (84, 85) are connected via the keys (86, 87) with their receptors (56, 66) on the controlled-connection gear shaft (103). The shaft (103) at the one side has an oil pump connected to a key (99) and to wings (100), and also has an aspiration pipe (108). The shaft (103) also has an internal-closure disk (92), which is sealed with the synthetic ring (90), which comes in tight contact with the cylindrical terminal (83) of the retention nut of the cylindrical bearing (88) of this area of the shaft (103). On the cylindrical terminal (83) of the nut, the seal (89) rests for retention and supply of the lubricant where it is required. The external cover of the pump (96) is fixed with the screws (93) and has its main supply pipe (98) with a split (97). Between the internal and external cover, the housing is closed with the ring (95). Also there is a relief valve (91) ensuring the proper operation pressures. The cylinder bearing (88) at its other side is retained by the spacer ring (81). The shaft of the controlled-connection gears (103) at the other end, also constituting the point where the rotational motion is output OUT is supported on the cylinder bearing (79), while internally it is held by the spacer ring (78) and is protected against oil leakage by the seal (80).

The controlled-connection gears (84, 85) via their receptors (56, 66) are finally supported on their shaft (103) with the self-aligned bearings (76, 77) having double rows of spheres. There are three operation conditions. In the first one, both rotate freely without any dynamic connection or coupling, thus we have the neutral. In the second condition, one still rotates freely as before, while the other has been clutched and provides work, and in the third condition the conditions are reversed between the gears of the second case.

For the better understanding of their operation, the following example is presented. Suppose that the second speed is preferred, as depicted in the figure. Then, the engine of the connection effector (68), after being activate to be released from its brake, will rotate its rotor, which has a ring with an internal motion-transmission thread (69), which is in direct contact with the respective thread (70) of the carrier (71), of the thrust bearing (72), entrains the clutch trigger drum (10). This, by moving to the right in the present figure forces the load spheres (74) to move from the circular path, of the frustoconical trigger, and to move slightly radially, to an oblique area, where they form at the side of the trigger, wedge surfaces, after exceeding the tension of the return springs (118). Thus, they cannot roll freely, and force the receptor of the key (66) to follow the angular rotational speed of the trigger (110). The trigger is connected to the shaft of the controlled-connection gears (103) via the spline and the smooth-operation spheres (101), which are held in position with the circlips (75). The trigger (110) comprises also the mass removal area (109). The controlled-connection gear (85), which in essence constitutes the second speed, after being selected, transmits the rotational motion derived from the planetary reducer to the constant-connection gears. It is obvious that as many pairs or simple insertions of rows of gears as we want or as it is necessary can be inserted to the output side.

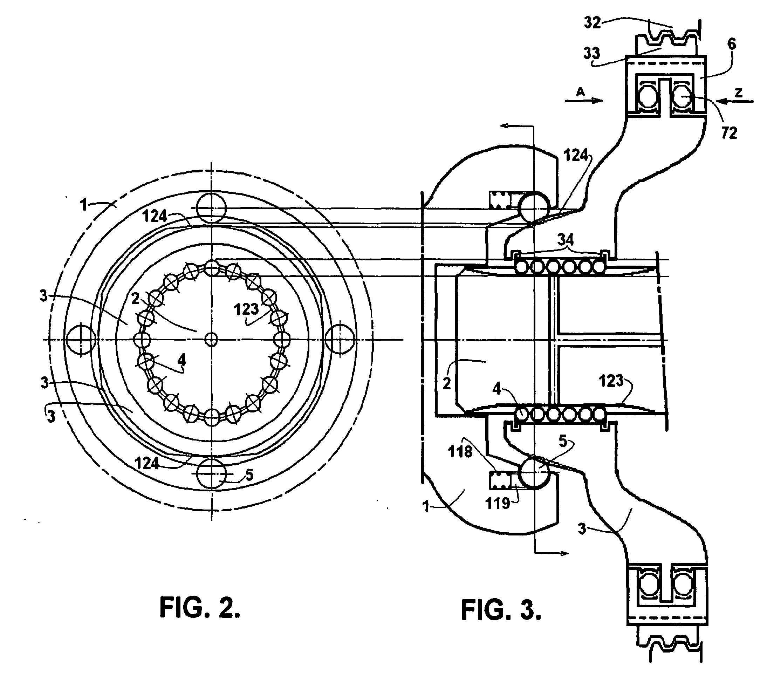

Figures 2 and 3 show the front view and side view of the clutch for the motion input to the box. The hollow frustoconical drum (3) is the receiver of coupling and transfer of the rotational motion to the spline (123). This transfer is effected by the smooth-transition spheres (4), which are held in place with the circlips (34). The frustoconical drum (3) configures one, also frustoconical, front which is designated as oblique flat area for interrupting the smooth periphery (124), in which the coupling spheres (5), located in a specific reception of the motion shaft (1), when pushed will stop rolling, will be immobilized due to space shortage and thus will transfer the motion to the speed box shaft (2). The coupling spheres (5), in order to be located in permanent contact with the shaft, in which they transfer the motion when demanded, are located in the receptions, which present flexibility, so that shocks are avoided. Also, the spheres (5) are aided with mini-pistons (119) and tension or return springs (118). When coupling (Z) or decoupling (A) is required, this is effected by the motion of the effector, not presented here, which displaces the hollow frustoconical drum (3), due to the connection of the threads of the rotor of the engine (32) and the threads of the carrier (33), which are permanently connected via the bearing (6) of the thrust bearings (72). It should be noted that the thrust bearings (72) and the carrier (7) are in permanent contact with the frustoconical drum (3).

It should be noted that the use of the input clutch is optional and only for energy saving and extending the lifetime of the unit. Its use is not limited only to the specific unit but anywhere it may be required. Also, the effector may be an electric engine, a hydraulic engine, a linear or rotational oscillator or even a conventional hairpin.

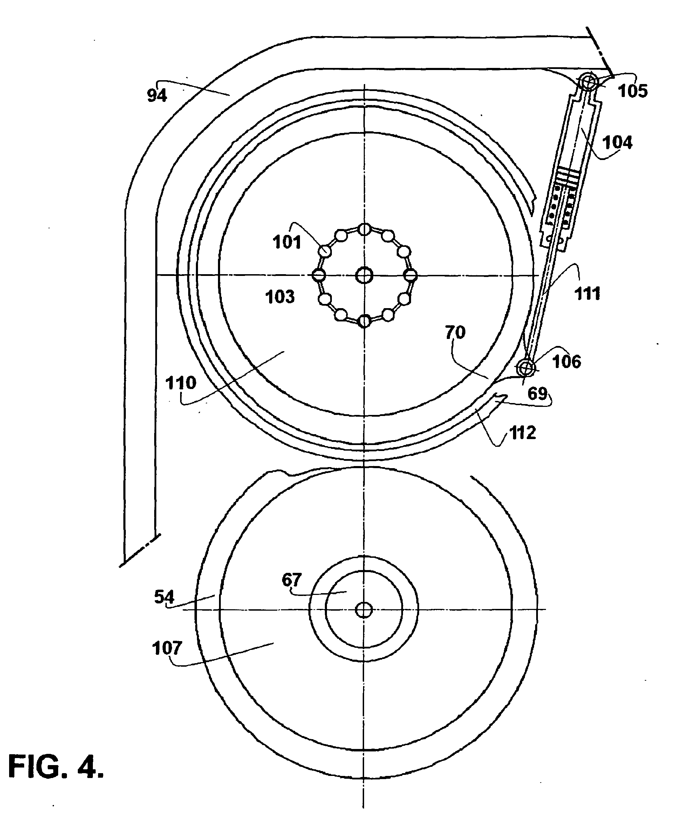

Figure 4 shows the control of the input clutch via the hydraulic cylinder. The cylinder (104), when it receives the hydraulic pressure of the oil, which is inserted via the coaxial fixing pin (105), will displace the piston (111) which is connected to the articulation (106) and will entrain the element (70), which in turn will react with the thread (112) of the surrounding nut (69), pushing the clutch triggering drum (110). From there, the motion will be transferred to the load spheres (5), not presented here, transferring the motion with the smooth transition spheres (101) to the spline (103) of the shaft (67). Then the motion is transferred via the receptors (107) of the permanent connection gears (54, 55) and their teeth (54) to the shaft (103) of the controlled-connection gears (84, 85) and from there it is transferred to the serving output.

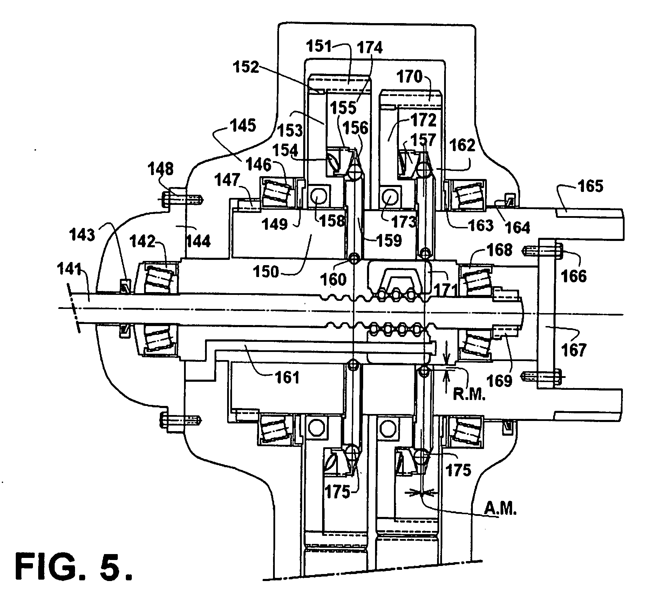

Figure 5 depicts the partial view of a serial box of quick speed alteration which uses a clutch with sphere screw for the connection and disconnection of gears. The screw (141) is supported on the cylinder bearings (142, 168) and is stabilized in relation to those with the nut (169) and with the cover of the box (164) with the connection screws of the cover (8), while it is sealed against leakage at the one side with the seal (163) and at the other side with the cover of the cylindrical bearing (167) and its screws (166). The nut (171) contains the rolling spheres and is held against rotation with the retention bar (161), so that an intervention with screwing-unscrewing is effected. On the retention bar (161), the housing of the unit (145) is fixed. All the assembly is located in the hollow shaft (150), on which the controlled-connection gears are fixed (84, 85). The shaft (150) is supported with its own cylidrical bearings (146), held in position with the spacer rings (149, 163) and is protected against oil leakage with the seal (164). The teeth of the gears of the second speed (151) and the teeth of the gears of the third speed (170) are fixed permanently via the keys (152, 171) on their receptors (153, 172). The receptors (153, 172) in turn are connected via the bearings (158, 173) on the hollow shaft (150). At the side of the receptors (153, 172) there are nuts (162, 174), which are screwed on the teeth (151, 170). Between these nuts (162, 174) and the receptors (153, 172) there are, for each one separately, pairs of conical return springs (154) and pistons (157). These pistons are equipped with a protrusion (155) which does not allow the angular displacement between pistons and nuts (157, 174 and 157, 162). The opposite areas of the pistons (156), up to a point, have a purely frustoconical shape forming a V, while from one point forward the shape is interrupted by oblique planes. In the area of V, there are load transmission spheres (175). The axial and radial position of the load spheres (175) is determined by the position that the connection activation bars (159) will receive, on which the spheres (175) permanently rest by the action of the return springs (154). The connection activation bars (159) have at the upper part an inclined configuration allowing the axial, in relation to the shaft axis, displacement of the spheres (175). The central terminal of the activation bars (159) is effected by the load transmission spheres (160), so that during speed exchange, the radial displacements of the bars, due to the axial displacement of the sphere screw (141), are smooth.

If as shown in figure the second-third speed is desired, then the nut (171) is shifted to the right by a command originating from the effector and the sphere screw (141), while at the same time the bars (159) are radially shifted to cover the distance (R.M.). At the same time, the oblique base of the upper end of the bar, except the radial displacement of the load transmission sphere (175) to the left, displaces also the piston (157) at the same direction and path (A.M.), compressing the conical return springs (154). Since however the load transmission spheres (175) have covered the distance (R.M.), these have been removed from the purely frustoconical area V and are in the narrowings of the oblique surfaces. This motion, in combination with the obligatorily parallel connection of the protrusion (155) of the piston (157) on the nut (162) cause the connection of this gear. The connected gear now transfers the motion received from the permanent-connection gear to the spline outputting the rotational motion (165). During this phase, the bearing connecting to the shaft (173) becomes inactive while the bearing connecting to the shaft (158) rotates idle. If the position of the nut containing the rolling spheres (171) is between the connection activation bar (159) and the bar holding the sheath against rotation, the speed is neutral.

According to an alternative embodiment of the invention, the shaft of the permanent connection gears may be changed with that of the controlled-motion gears, so that, under "neutral" conditions, elements do not move, even idle, for energy saving. It should also be noted that we can insert at the output side as many pairs of gears as necessary or desired for our purpose.

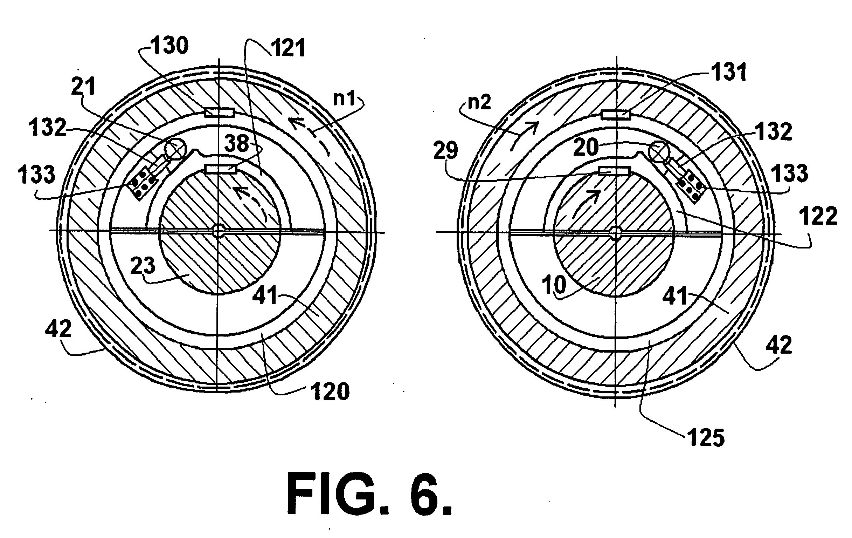

Figure 6 shows two overrunning clutches, positioned one after the other in axial position on a common carrier (41). By this way, the unimpeded change in the direction of the rotational speed is effected, without one influencing the other. At the left part of the page, one overrunning clutch (clutch) is shown, where the motion from the stepwise cylinder-shaft (23) of the loop of the planetary reducer is received by the connection key (38) of the internal ring (121), while the rotational motion to the external ring (120) of the overrunning clutch is output by rotational motion transmission key (130) and from there the motion is transferred to the common clutch carrier (41). At the right part of the page, another overrunning clutch (clutch) is shown, where similarly the connection key (29) of the internal ring (122) receives motion from the extension of the planetary carrier (10) and the connection key (131) of the external ring (125) transmits it to the common clutch carrier (41) and from there to the common shaft of the clutch carrier (42). It should be understood that if the motion reaches from the extension of the planet carrier (10), its direction is clockwise (n2), while if it reaches from the stepwise cylinder of the loop (23) is counter-clockwise (n1). The selected motion is transmitted via the common shaft of the clutch carrier (42) to the flexible joint. The load spheres of the loop overrunning clutch (20) and the spheres of the planetary carrier (21) are maintained in permanent contact with the respective external rings (46) and (43) by means of the element (132), which cooperates with the return springs (133), so that the overrunning clutches fulfill their purpose.

its direction is clockwise (n2), while if it reaches from the stepwise cylinder of the loop (23) is counter-clockwise (n1). The selected motion is transmitted via the common shaft of the clutch carrier (42) to the flexible joint. The load spheres of the loop overrunning clutch (20) and the spheres of the planetary carrier (21) are maintained in permanent contact with the respective external rings (46) and (43) by means of the element (132), which cooperates with the return springs (133), so that the overrunning clutches fulfill their purpose.

## Claims

1. Serial box of quick speed alteration, wherein the alteration of the speed is possible without the need to interrupt the transmission or to decouple the clutch of the box, irrespective of the rotational motion by which the engine moves and is equipped with a planetary reducer (15, 17, 19) as an initial reduction stage and with pairs of ratio gears (54-84, 55-85) arranged in two parallel shafts, one of constant connection (2) and one of controlled connection (103), and can be applied to all kinds of vehicles, **characterized in that** the controlled connection gears (84, 85) of the output shaft (103) are controlled by a common clutch, which uses two overrunning clutches (20, 21) of conventional type, positioned one after the other in axial arrangement and provide the rotational motion, of alternate direction, to a common clutch carrier (42) with output the shaft with the constant connection gears (2).

2. Serial box of quick speed alteration, according to claim 2, **characterized by** the presence of a motion input clutch, which comprises also "neutral" speed, allowing an energy saving, pre-heating of the engine and extension of the lifetime of the engine.

3. Serial box of quick speed alteration, according to claim 2, **characterized in that** the connection control on the gears of the final output shaft (1) is effected by the two-way trigger (110) of alternate gear connection.

4. Serial box of quick speed alteration, according to claim 2, **characterized in that** the control of the connection of the gears of the final output shaft (1) is effected by a sphere screw (141), the sheath of which extends internally of the shaft and between which sheath and the remaining system of the gears, activation bars (159) of the load transmission spheres (175) are radially interposed, which effect the constant coupling of the remaining components, while in parallel on the sheath the controlled-connection gears are positioned.

5. Serial box of quick speed alteration, according to claims 1 to 4, **characterized in that** all kinds of effectors may be reversible electric engines with brake, step motors, hydraulic cylinders, hydraulic rotational oscillators, haipins cooperating with any of the above means or with mechanical lever arms and/or with wires.

6. Serial box of quick speed alteration, according to claim 2, **characterized in that** the positions of the constant (2) and controlled connection (103) shafts may be exchanged between them so that the unnecessary rotation of all the accessories after the planetary reducer is avoided, for energy saving.

## Patentansprüche

1. Serielle Box zur schnellen Geschwindigkeitsveränderung, wobei die Veränderung der Geschwindigkeit ohne die Übertragung unterbrechen zu müssen oder die Kupplung des Boxes entkoppeln zu müssen möglich ist, unabhängig von der Drehbewegung durch die der Motor bewegt sich und das mit einem planetarischen Getriebe (15, 17, 19) als eine erste Reduktionsphase und mit Paaren von Getriebeübersetzung (54-84, 55-85), die in zwei parallele Wellen, eine ständige Verbindungswelle (2) und eine kontrollierte Verbindungswelle (103), angeordnet sind, ausgestattet ist, und das auf alle Arten von Fahrzeugen eingesetzt werden kann, **dadurch gekennzeichnet dass** die kontrollierte Verbindungszahnräder (84, 85) der Abtriebswelle (103) durch eine gemeinsame Kupplung gesteuert werden, die zwei Freiläufe (20, 21) herkömmlicher Art verwendet, die nacheinander in axialer Anordnung liegen und die Drehbewegung von wechselnden Richtung zu einem gemeinsamen Kupplungsträger (42) bereitstellen, wobei als Output die Welle (2) mit den konstanten Verbindungszahnräder wirkt.

2. Serielle Box zur schnellen Geschwindigkeitsveränderung, nach Anspruch 1, **gekennzeichnet durch** die Anwesenheit einer Bewegungseingangskupplung, die auch "neutral" Geschwindigkeit ausmacht, die eine Energieeinsparung, Vorwärmen des Motors und Verlängerung der Lebensdauer des Motors ermöglicht.

3. Serielle Box zur schnellen Geschwindigkeitsveränderung, nach Anspruch 1, **dadurch gekennzeichnet, dass** die Verbindungskontroll auf die Zahnräder der letzten Abtriebswelle (1) durch einen Zwei-Wege-Auslöser (110) von alternativen Zahnrad-Verbindung erfolgt.

4. Serielle Box zur schnellen Geschwindigkeitsveränderung, nach Anspruch 1, **dadurch gekennzeichnet, dass** die Kontrolle über die Verbindung der Zahnräder der letzten Abtriebswelle (1) durch eine Kugelschraube (141) geübt wird, deren Hülle sich innerhalb der Welle erstreckt und zwischen der Hülle und dem restlichen System der Zahnräder die Aktivierungsbars (159) der KraftübertragungsKugeln (175) radial angeordnet sind, die die ständige Kopplung der übrigen Komponenten wirken, während parallel dazu auf der Hülle die kontrollierten Verbindungszahnräder positioniert sind.

5. Serielle Box zur schnellen Geschwindigkeitsveränderung, nach den Ansprüchen 1-4, **dadurch gekennzeichnet, dass** alle Arten von Effektoren reversible Elektromotoren mit Bremse, Schrittmotoren, Hydraulikzylindern, hydraulischen Dreh-Oszillatoren, Haarnadeln sein können, die in Zusammenarbeit mit einer der oben genannten Mitteln oder mit mechanischen Hebelarmen und / oder mit Drähten stehen.

6. Serielle Box zur schnellen Geschwindigkeitsveränderung, nach Anspruch 1, **dadurch gekennzeichnet, dass** die Positionen der konstanten Welle (2) und kontrollierten Verbindungswelle (103) auseinandergetauscht werden können, so dass die unnötigen Rotation alle Zubehörteile nach der planetarischen Getriebe vermieden wird, zur Energieeinsparung.

## Revendications

1. Boîte série pour modification rapide de vitesse dans laquelle la modification de vitesse est possible sans avoir besoin d'interrompre la transmission ou de découpler l'embrayage de la boîte, quel que soit le sens de rotation du moteur, qui est équipée d'un réducteur planétaire (15, 17, 19) en tant qu'une étape de réduction initiale et des paires de pignons rapport (54-84, 55-85) disposés en deux arbres parallèles, l'un en connexion constante (2) et l'autre en connexion contrôlée (103), pouvant être appliquée à tous les types de véhicules, **caractérisée en ce que** les engrenages de connexion contrôlée (84, 85) de l'arbre de sortie (103) sont contrôlés par un embrayage commun, qui utilise deux embrayages à roue libre (20, 21), de type classique, positionnés l'un après l'autre en disposition axiale et fournissant le mouvement de rotation, en sens alterné, à un porte-embrayage commun (42), sa sortie étant l'arbre avec les engrenages de connexion constante (2).

2. Boîte série pour modification rapide de vitesse, selon la revendication 1, **caractérisée par** la présence d'un embrayage d'entrée de mouvement, qui comprend aussi «neutre» de vitesse, permettant une économie d'énergie, de pré-chauffage du moteur et l'extension de la durée de vie du moteur.

3. Boîte série pour modification rapide de vitesse, selon la revendication 1, **caractérisé en ce que** le contrôle de connexion sur les pignons de l'arbre de sortie final (1) est effectuée par un déclencheur (110) de connexion vitesse alternative dans les deux sens.

4. Boîte série pour modification rapide de vitesse, selon la revendication 1, **caractérisée en ce que** le contrôle de la connexion de l'engrenage de l'arbre de sortie final (1) est effectué par une vis sphère (141), dont la gaine s'étend en interne de l'arbre, entre la gaine et le système reste des pignons étant interposés radialement des bars d'activation (159) des sphères de transmission de charge (175), réalisant le couplage constante des composantes restantes, tout en parallèle sur la gaine étant positionnés les engrenages de connexion contrôlée.

5. Boîte série pour modification rapide de vitesse, selon les revendications 1 à 4, **caractérisée en ce que** les effecteurs peuvent être moteurs réversibles électriques avec frein, moteurs pas à pas, des vérins hydrauliques, des oscillateurs rotation hydrauliques, épingles coopérant avec n'importe quel des moyens ci-dessus ou avec des bras de levier mécaniques et / ou avec des fils.

6. Boîte série pour modification rapide de vitesse, selon la revendication 1, **caractérisée en ce que** les positions des arbres en connexion constante (2) ou contrôlée (103) peuvent être échangées entre eux de sorte que la rotation inutile de tous les accessoires après le réducteur planétaire soit évitée, pour économiser l'énergie.
